# EUROPÄISCHE PATENTANMELDUNG

(11) **EP 2 348 796 A1**
(43) Veröffentlichungstag der Anmeldung: **27.07.2011**
(21) Anmeldenummer: 10000679.0
(22) Anmeldetag: 23.01.2010
(51) Int. Cl.: H05B 37/02, F21V 33/00

(54) **Synchronisierbares Anzeigeelement-System**

(71) Anmelder: Bayer MaterialScience AG, 51368 Leverkusen (DE)
(72) Erfinder: Degiorgio, Nicolas, 47800 Krefeld (DE); Knippenberg, Dirk, 51789 Lindlar (DE); Wagner, Thomas, 63594 Hasselroth (DE); Getrost, Martin, Philipp, 53757 Sankt Augustin (DE)

(57) **Zusammenfassung**

Ein synchronisierbares Anzeigeelement-System umfasst eine erste Anzeigeelement-Gruppe (10), umfassend eine Mehrzahl von individuell ansteuerbaren Anzeigeelementen (20, 21, 22, 23) und eine Steuerungseinheit (30) zur taktgebundenen sequentiellen Ansteuerung der Anzeigeelemente (20, 21, 22, 23); und eine zweite Anzeigeelement-Gruppe (40), umfassend eine Mehrzahl von individuell ansteuerbaren Anzeigeelementen (50, 51, 52, 53) und eine Steuerungseinheit (60) zur taktgebundenen sequentiellen Ansteuerung der Anzeigeelemente (50, 51, 52, 53); wobei die Steuerungseinheiten (30, 60) der Anzeigeelement-Gruppen (10, 40) jeweils Taktgeber-Module (31, 61) umfassen, welche eingerichtet sind, um auf ein drahtlos gemeinsam an die Steuerungseinheiten (30, 60) übermitteltes Signal (71, 81) hin eine Takterzeugung abzubrechen und gemeinsam neu zu beginnen. Mit dem System können synchronisierbare Lauflichter in Möbelstücken realisiert werden. Die Erfindung betrifft weiterhin ein Verfahren zum Betrieb eines solchen Systems.

## Beschreibung

Die vorliegende Erfindung betrifft ein synchronisierbares Anzeigeelement-System, wie es beispielsweise in Möbeln eingesetzt werden kann. Das System umfasst eine erste und eine zweite Anzeigeelement-Gruppe, die wiederum jeweils eine Mehrzahl von individuell ansteuerbaren Anzeigeelementen und jeweils eine Steuereinrichtung zur taktgebundenen sequentiellen Ansteuerung der Anzeigeelemente umfassen. Die Erfindung betrifft weiterhin ein Verfahren zum Synchronisieren eines solchen Systems.

Die Ausstattung von Möbelstücken mit Leuchtelementen kann sowohl vor dem Hintergrund einer Sicherheits- und Anzeigefunktion der Beleuchtung als auch aus ästhetischen Erwägungen heraus geschehen. So beschreibt beispielsweise DE 202 18 114 U1 einen Handlauf, der sich dadurch auszeichnet, dass dünnwandigste Echtholzfurniere, Natur-, Carbon- und Keramikfasergewebe mit einer maximalen Dicke von 0,03 mm, die technologisch spezifisch behandelt und verformt werden, und verformte Elemente, die mit Lichtquellen/Leuchtmitteln kombiniert und unlösbar mit dem Grundkörper des Handlaufs an beliebiger Stelle verbunden werden und dessen Querschnitt an seiner Unterseite eine Ausfräsung enthält, wo eine Lichtquelle/Leuchtmittel zur indirekten Beleuchtung des Treppenverlaufs eingesetzt wird.

Beleuchtete Bauteile und Bauelemente für den Möbel- und Innenausbau werden in DE 203 08 514 U1 behandelt. Sie sind dadurch gekennzeichnet, dass die Bauelemente und Bauteile mit Echtholzfurnieren, Naturstein-, Keramik- und Glasplatten beziehungsweise Natur-, Keramik- und Karbonfasergeweben mit einer Dicke von 0,015 mm beziehungsweise 0,03 mm verbunden sind, wobei die Echtholzfurniere, die Naturstein-, Keramik- und Glasplatten und die Naturstein-, Keramik- und Karbonfasergewebe mit Lichtquellen/Leuchtmitteln versehen sind und die Echtholzfurniere mit einem Infiltrationsmittel infiltriert werden.

Zu dreidimensionalen Beleuchtungsstrukturen kombinierbare Module mit Helligkeitssteuerung werden in WO 2005/004551 A1 beschrieben.

Für einige Anwendungsfelder ist es gewünscht, dass in getrennten Bauteilen synchrone Lichteffekte realisiert werden. Solche synchronen Lichteffekte können beispielsweise Lauflichter an einem rechten und linken Treppengeländer, an einem Tisch und einem Stuhl und dergleichen sein. Hierbei stellt sich die Frage, wie eine Synchronisierung erreicht werden kann. Trotz der Benutzung einer Zeitkonstanten wie Schwingquarzen wird, bedingt durch Bauteiltoleranzen und durch ein unabhängiges Einschalten der unabhängigen Objekte, bei längerem Betrieb ein Auseinanderdriften der Lichteffekte zu beobachten sein.

US 2005/0035728 A1 schlägt hierzu eine Beleuchtungsvorrichtung mit einem Prozessor vor. Der Prozessor ist eingerichtet, um einen von der Beleuchtungsvorrichtung erzeugten Farbwechsel-Lichteffekt zu kontrollieren. Weiterhin ist der Prozessor eingerichtet, um eine Stromquelle zu überwachen und um den Farbwechsel-Lichteffekt in Abstimmung mit einem Parameter der Stromquelle zu synchronisieren. Als Beispiel wird die Leistung, Spannung oder Stromstärke einer Wechselstromquelle genannt.

Der Nachteil dieser Lösung ist jedoch, dass zwangsläufig eine Verbindung zu einer geeigneten Stromquelle bestehen muss. Dieses begrenzt die Einsatzmöglichkeiten einer solchen Beleuchtungsvorrichtung. Insbesondere eignet sich diese Lösung nicht bei beweglichen Leuchtobjekten, die beliebig im Raum positioniert werden sollen.

Wünschenswert wären aber solche Beleuchtungs- und sonstige Anzeigeelement-Systeme, die Effekte wie beispielsweise Lauflichter erzeugen können, wobei die einzelnen Effekte zeitlich synchronisiert werden können, ohne dass dabei auf eine Wechselstromquelle oder andere per Kabel übertragene Synchronisationssignale zurückgegriffen werden muss.

Erfindungsgemäß vorgeschlagen wird daher ein synchronisierbares Anzeigeelement-System, umfassend:
eine erste Anzeigeelement-Gruppe, umfassend eine Mehrzahl von individuell ansteuerbaren Anzeigeelementen und eine Steuerungseinheit zur taktgebundenen sequentiellen Ansteuerung der Anzeigeelemente; und
eine zweite Anzeigeelement-Gruppe, umfassend eine Mehrzahl von individuell ansteuerbaren Anzeigeelementen und eine Steuerungseinheit zur taktgebundenen sequentiellen Ansteuerung der Anzeigeelemente;
wobei die Steuerungseinheiten der Anzeigeelement-Gruppen jeweils Taktgeber-Module umfassen, welche eingerichtet sind, um auf ein drahtlos gemeinsam an die Steuerungseinheiten übermitteltes Signal hin eine Takterzeugung abzubrechen und gemeinsam neu zu beginnen.

Im erfindungsgemäßen System umfasst jede Anzeigeelement-Gruppe eine Mehrzahl von individuell ansteuerbaren Anzeigeelementen. Geeignete Anzeigeelemente sind beispielsweise optische, akustische und/oder taktile Anzeigeelemente. Bevorzugt sind hierbei Leuchtelemente. Der Begriff "individuell ansteuerbar" bedeutet, dass jedes Anzeigeelement unabhängig von den anderen Anzeigeelementen seine Anzeigefunktion wahrnehmen kann.

Die Anzeigeelement-Gruppen umfassen weiterhin jeweils eine Steuerungseinheit. Diese Steuerungseinheit ist eingerichtet, um die Anzeigeelemente anzusteuern. Hierbei erfolgt die Ansteuerung sequentiell, also nacheinander. Selbstverständlich können auch Anzeigeelemente zu Gruppen zusammengefasst werden und dann die Gruppen sequentiell angesteuert werden.

Weiterhin erfolgt die Ansteuerung taktgebunden. Dieses bedeutet, dass ein vorbestimmter zeitlicher Abstand zwischen dem Ansteuern eines Anzeigeelements und dem Ansteuern des nächsten Elements herrscht. Die Dauer der Ansteuerung selbst ist nicht näher festgelegt und kann derart sein, dass eine überlappende oder auch eine nicht überlappende Ansteuerung erfolgt. Der zeitliche Abstand kann für die Elemente gleich sein oder beispielsweise länger oder kürzer werden.

Ein Beispiel für einen gleichen Abstand wäre, dass zwischen der Ansteuerung eines Elements und des nächsten Elements jeweils 100 Takteinheiten vergehen. Bei einem länger werdenden Abstand könnten beispielsweise zwischen dem ersten und dem zweiten Element 100 Takteinheiten vergehen, zwischen dem zweiten und dem dritten Element 110 Takteinheiten, zwischen dem dritten und dem vierten Element 120 Takteinheiten und so weiter. Bei einem kürzer werdenden Abstand könnten zum Beispiel zwischen dem ersten und dem zweiten Element 100 Takteinheiten vergehen, zwischen dem zweiten und dem dritten Element 90 Takteinheiten, zwischen dem dritten und dem vierten Element 80 Takteinheiten und so weiter.

Die Steuerungseinheit kann beispielsweise in Form eines integrierten Schaltkreises oder ganz oder teilweise in einem Mikrocontroller realisiert werden. Weiterhin umfassen die Steuerungseinheiten Taktgeber-Module, auf deren Takt hin die Anzeigeelemente angesteuert werden. Der Takt kann unter anderem durch einen Schwingquarz erzeugt werden.

Ein Merkmal der Taktgeber-Module in den einzelnen Steuerungseinheiten ist es, dass sie auf ein gemeinsam an die Steuerungseinheiten übermitteltes Signal die laufende Takterzeugung abbrechen und gemeinsam, also zeitgleich, neu beginnen. Als Reaktion auf das Signal wird auf diese Weise die Takterzeugung zurückgesetzt, so dass synchron in den verschiedenen Anzeigeelement-Gruppen neu begonnen werden kann. Folglich können die einzelnen Anzeigeelement-Gruppen mit ihrem Taktgeber-Modul auch autark funktionieren, werden aber auf ein gemeinsames Signal hin synchronisiert.

Das Empfangen des drahtlosen Signals muss nicht unbedingt durch die Taktgeber-Module selbst innerhalb der Steuerungseinheiten erfolgen. Vielmehr kann es zum Beispiel auch an anderer Stelle empfangen werden und innerhalb der Steuerungseinheiten verarbeitet werden, wodurch schließlich die Takterzeugung zurückgesetzt wird.

Dieses Signal wird drahtlos übermittelt. Geeignete Übermittlungen sind insbesondere Funksignale, Bluetooth-, RFID- (radio frequency identification), WPAN- (wireless personal area network; IEEE 802.15-Standard) und WLAN- (wireless local area network; IEEE 802.11-Standard) Techniken. Weiterhin ist eine Übermittlung durch optische Signale, Infrarotsignale, akustische Signale und Ultraschallsignale denkbar. Durch das drahtlose Verfahren können im Prinzip beliebig viele Anzeigeelement-Gruppen ortsunabhängig erreicht werden.

Neben der Unabhängigkeit von Stromleitungen mit ihrer Wechselstromfrequenz als Synchronisationsquelle weist das erfindungsgemäße System den Vorteil einer spontanen Skalierbarkeit auf. Es können zu beliebigen Zeitpunkten weitere Anzeigeelement-Gruppen in das System eingefügt werden, welche dann mit synchronisiert werden. Dieses Verhalten lässt sich mit dem Begriff des Schwarmverhaltens umschreiben.

Das erfindungsgemäße System lässt sich in einem anschaulichen Beispiel als Möbelanordnung vorstellen. Eine Anzeigeelement-Gruppe könnte in einem Tisch untergebracht sein, eine weitere Gruppe in einem Stuhl. Selbstverständlich lassen sich noch weitere Anzeigeelement-Gruppen in Form von weiteren Stühlen in das System integrieren. Die Anzeigeelemente in den einzelnen Möbelstücken sind als Lauflichter ausgeführt, die synchron leuchten sollen, so dass beispielsweise bei den einzelnen Stühlen die Lauflichtsequenz immer auf demselben Stand ist.

Bevorzugte Ausführungsformen der vorliegenden Erfindung werden nachfolgend geschildert, wobei die Ausführungsformen in beliebiger Weise mit der eingangs geschilderten Erfindung kombiniert werden können, sofern sich aus dem Zusammenhang nicht eindeutig das Gegenteil ergibt.

In einer Ausführungsform des erfindungsgemäßen Systems ist das drahtlose Signal zum Abbrechen der Takterzeugung ein Langwellen-Zeitsignal ist und/oder es wird mittels eines drahtlosen Netzwerks übertragen. Geeignete Langwellen-Zeitsignale sind beispielsweise für Mitteleuropa das DCF77-Signal (77,5 kHz) und weiterhin die Signale der Sender HBG in der Schweiz (75 kHz), MSF in England (60 kHz) und die Sendergruppen RWM in Russland und WWV, WWVB, WWVH in den USA. Der Vorteil solcher ohnehin verfügbarer Signale ist, dass das System einfach konstruiert werden kann.

Je nach Einsatzzweck des erfindungsgemäßen Systems kann beispielsweise vorgesehen sein, dass jede Sekunde, jede Minute oder jede Stunde die Takterzeugung zurückgesetzt wird. Die Übertragung des Signals durch ein drahtloses Netzwerk bietet dann Vorteile, wenn aufgrund von Empfangsschwächen die Langwellen-Zeitsignale nicht zuverlässig empfangen werden können. Geeignete Netzwerke basieren insbesondere auf dem IEEE 802.11-Standard.

In einer weiteren Ausführungsform des erfindungsgemäßen Systems umfasst dieses weiterhin eine Kontrolleinheit, welche drahtlos mit der ersten und zweiten Anzeigeelement-Gruppe kommuniziert und welche eingerichtet ist, um gemeinsam an die Steuerungseinheiten drahtlos ein Signal zum Abbrechen der Takterzeugung und zum gemeinsamen Neubeginn der Takterzeugung zu übermitteln. Mittels der Kontrolleinheit lässt sich das erfindungsgemäße System als master/slave-Anordnung konfigurieren. Der Einsatz einer solchen Kontrolleinheit ist insbesondere dann vorteilhaft, wenn aufgrund der baulichen Gegebenheiten, in denen das erfindungsgemäße System eingesetzt werden soll, kein zuverlässiger Empfang von Funkzeitsignalen wie dem DCF77-Signal zu erwarten ist.

Die Kontrolleinheit kann als weitere, externe Komponente des Systems oder auch als Bestandteil einer Steuerungseinheit vorliegen. Im Falle einer externen Komponente kann sie zum Beispiel günstig im Raum positioniert werden, um alle Gruppen des Systems zu erreichen. Genausogut kann sie als Bestandteil einer Steuerungseinheit bereits in einer Anzeigeelement-Gruppe integriert sein. Dieses könnte anschaulicherweise in einem Tisch erfolgen, welcher die ihn umgebenden Stühle kontrolliert.

Die drahtlose Kommunikation zwischen der Kontrolleinheit und den Anzeigeelement-Gruppen kann insbesondere über Funksignale, Bluetooth-, RFID-, WPAN- und WLAN-Techniken erfolgen.

In einer weiteren Ausführungsform des erfindungsgemäßen Systems umfassen die erste Anzeigeelement-Gruppe und die zweite Anzeigeelement-Gruppe jeweils eine Kontrolleinheit, welche zum drahtlosen Senden und Empfangen von Signalen eingerichtet sind und wobei eine der Kontrolleinheiten drahtlos mit der ersten und zweiten Anzeigeelement-Gruppe kommuniziert und eingerichtet und vorgesehen ist, um gemeinsam an die Steuerungseinheiten drahtlos ein Signal zum Abbrechen der Takterzeugung und zum gemeinsamen Neubeginn der Takterzeugung zu übermitteln.

Hierbei lässt sich das erfindungsgemäße System ebenfalls in einer master/slave-Anordnung konfigurieren. Zusätzlich sind die Kontrolleinheiten für einen Duplex-Betrieb ausgerüstet. Hierdurch lässt sich das System weiter funktionalisieren. So kann beispielsweise für das Synchronisationssignal ein Quittungsbetrieb eingeführt werden. Auf diese Weise können Signale wiederholt werden, falls zum Beispiel durch Funkstörungen eine Information verlorengeht.

Eine weitere Funktionalisierung im Duplex-Betrieb ist, dass Anzeigeelement-Gruppen zu größeren Gruppen zusammengefasst werden können. Weiterhin ist es möglich, dass neue Animationsprogramme für die Anzeigeelemente von einer master-konfigurierten Einheit an slave-konfigurierte Einheiten verteilt werden.

Auch hier kann die drahtlose Kommunikation zwischen der Kontrolleinheit und den Anzeigeelement-Gruppen insbesondere über Funksignale, Bluetooth-, RFID-, WPAN- und WLAN-Techniken erfolgen.

Vorteilhafterweise ist hierbei diejenige der Kontrolleinheiten, welche nicht vorgesehen ist, um an die Steuerungseinheiten drahtlos ein Signal zum Abbrechen der Takterzeugung und zum gemeinsamen Neubeginn der Takterzeugung zu übermitteln, eingerichtet, um an die andere der Kontrolleinheiten Informationen über die kontrollierte Anzeigeelement-Gruppe zu senden.

Solche Statusinformationen können unter anderem gerätespezifische Identifikationsnummern sein. Andere Informationen können den Status der Gruppe oder Eigenschaften der Gruppe wie die Anzahl der Anzeigeelemente betreffen. Dieses ist vorteilhaft, wenn das erfindungsgemäße System heterogen bezüglich der Anzahl der individuellen Anzeigeelemente in den einzelnen Anzeigeelement-Gruppen ist. Dann können zum Beispiel Parameter wie die Geschwindigkeit der einzelnen Lauflichter-Einheiten durch die führende Kontrolleinheit berücksichtigt werden.

In einer weiteren Ausführungsform des erfindungsgemäßen Systems ist mindestens eine der Steuerungseinheiten eingerichtet, um beim Vorliegen von Signalen aus mehreren Quellen zum Abbrechen der Takterzeugung und zum gemeinsamen Neubeginn der Takterzeugung gemäß einer vorbestimmten Regel das Signal einer Quelle auszuwählen und auf dieses Signal hin die Takterzeugung abzubrechen und neu zu beginnen. Der Fall, dass solche Signale aus mehreren Quellen stammen, liegt insbesondere vor, wenn mehrere der erfindungsgemäßen Systeme in master/slave-Konfiguration nebeneinander vorliegen und die slave-konfigurierten Anzeigeelement-Gruppen des einen Systems auch die Signale der master-konfigurierten Einheit des anderen Systems empfangen können.

Die vorbestimmte Auswahlregel kann anhand von gerätespezifischen Identifikatoren operieren. Auf diese Weise ist eine slave-konfigurierte Einheit an seine master-konfigurierte Einheit gebunden. Andere Varianten der Auswahlregel sind, dass jeweils das stärkste Signal oder das Signal des räumlich am nächsten gelegenen Senders berücksichtigt werden sollen. Wird das Signal des nächstgelegenen Senders verwendet, so kann ein Wechsel einer slave-konfigurierten Anzeigeelement-Gruppe unter die Kontrolle einer anderen master-konfigurierten Anzeigeelement-Gruppe leicht bewerkstelligt werden.

Ist zum Beispiel eine slave-konfigurierte Gruppe in einem Stuhl untergebracht und wird dieser Stuhl von einem Tisch mit einer master-konfigurierten Gruppe zu einem anderen master-konfigurierten Tisch herübergetragen, so synchronisiert sich die Anzeigeelement-Gruppe in diesem Stuhl neu, um sich den bereits am neuen Tisch befindlichen Anzeigeelement-Gruppen anzupassen. Nach erfolgter Umgruppierung kann zusätzlich vorgesehen sein, dass die Anzeigeelemente eine Sondersequenz durchführen, um den Übergang für den Anwender zu dokumentieren.

In einer weiteren Ausführungsform des erfindungsgemäßen Systems sind die Anzeigeelemente ausgewählt aus der Gruppe umfassend Leuchtdioden (LEDs), organische Leuchtdioden (OLEDs) und/oder elektrolumineszente Folien (EL-Folien). Diese Elemente lassen aufgrund ihrer geringen Abmessungen und ihres geringen Energieverbrauchs einem Gestalter große Freiheiten insbesondere beim Entwurf von Möbelstücken, welche Teile des erfindungsgemäßen Systems enthalten.

Ein weiterer Gegenstand der vorliegenden Erfindung ist ein Verfahren zum Synchronisieren eines Anzeigeelement-Systems, umfassend die Schritte:
Bereitstellen eines Systems gemäß der vorliegenden Erfmdung; und
Senden eines drahtlosen Signals an die Steuerungseinheiten zum Abbrechen der Takterzeugung und zum gemeinsamen Neubeginn der Takterzeugung.

In einer Ausführungsform des erfindungsgemäßen Verfahrens ist das drahtlose Signal zum Abbrechen der Takterzeugung ein Langwellen-Zeitsignal und/oder es wird mittels eines drahtlosen Netzwerks übertragen. Details wurden bereits im Zusammenhang zum System ausgeführt, so dass zur Vermeidung von Wiederholungen hierauf Bezug genommen wird.

Die Erfindung betrifft weiterhin eine Möbelanordnung, umfassend ein System gemäß der vorliegenden Erfindung. Wie bereits erwähnt, kann eine solche Möbelanordnung ein Ensemble aus Tischen und Stühlen oder Tischen und Bänken sein. Weiter denkbare Ensembles wären Bartresen und Barhocker, Stehpulte und Konferenztische und dergleichen mehr. Das erfindungsgemäße System kann aufgrund seiner Synchronisationsmöglichkeiten hier besondere ästhetische Effekte erzielen.

Die vorliegende Erfindung wird anhand der nachfolgenden Figuren weiter erläutert, ohne jedoch hierauf beschränkt zu sein. Es zeigen:
- FIG. 1: ein erfindungsgemäßes Anzeigeelement-System
- FIG. 2a-2c: ein erfindungsgemäßes Anzeigeelement-System während verschiedener Phasen des Betriebs
- FIG. 3: ein weiteres erfindungsgemäßes Anzeigeelement-System
- FIG. 4: ein weiteres erfindungsgemäßes Anzeigeelement-System

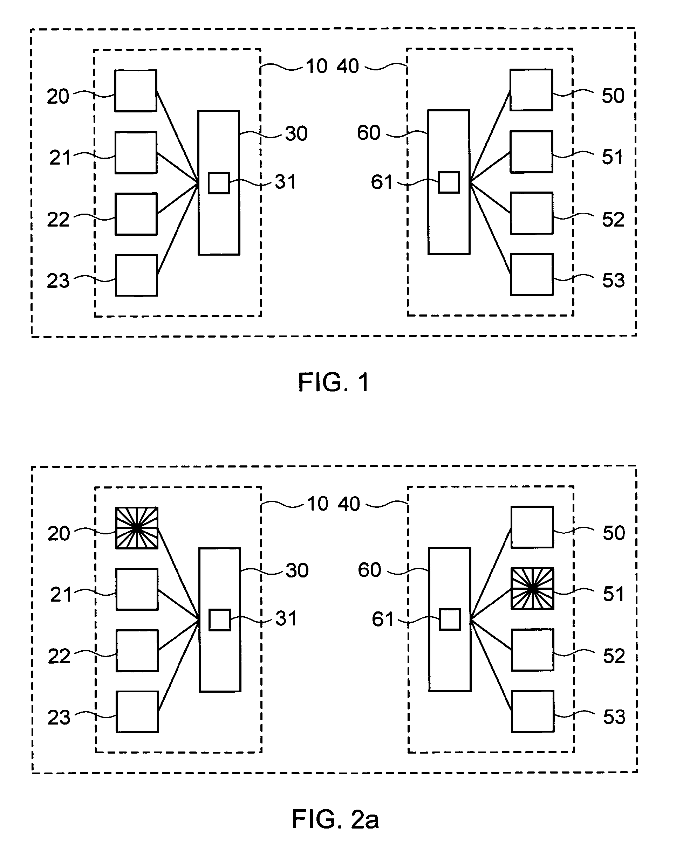

FIG. 1 zeigt schematisch ein erfindungsgemäßes Anzeigeelement-System. In diesem System enthalten sind eine erste Anzeigeelement-Gruppe 10 und eine zweite Anzeigeelement-Gruppe 40, hier jeweils ausgeführt als Lauflicht-Einheiten. In den Anzeigeelement-Gruppen 10, 40 sind einzelne Anzeigeelemente 20, 21, 22, 23 und 50, 51, 52, 53 in Form von Elektrolumineszenz-Folien (EL-Folien) enthalten. Sie werden durch Steuereinheiten 30, 60 individuell angesteuert. In diesen Steuereinheiten ist jeweils ein Taktgeber-Modul 31, 61 vorgesehen. Vorgesehen ist auch, dass die Anzeigeelemente der beiden Gruppen 10, 40 synchron leuchten, also dass Elemente 20 und 50 zusammen leuchten, danach Elemente 21 und 51, etc. Auf diese Weise erhält man Lauflichter-Effekte.

FIG. 2a zeigt eine Situation, wie sie durch Bauteiltoleranzen bedingt nach einiger Zeit während des Betriebs einer zuvor beschriebenen Lauflichter-Anordnung auftreten kann. In einer Anzeigeelement-Gruppe 10 leuchtet das oberste Element 20, wohingegen in der anderen Gruppe 40 nicht das korrespondierende Element 50, sondern ein anderes Element 51 leuchtet. Die Lauflichter sind hier folglich asynchron.

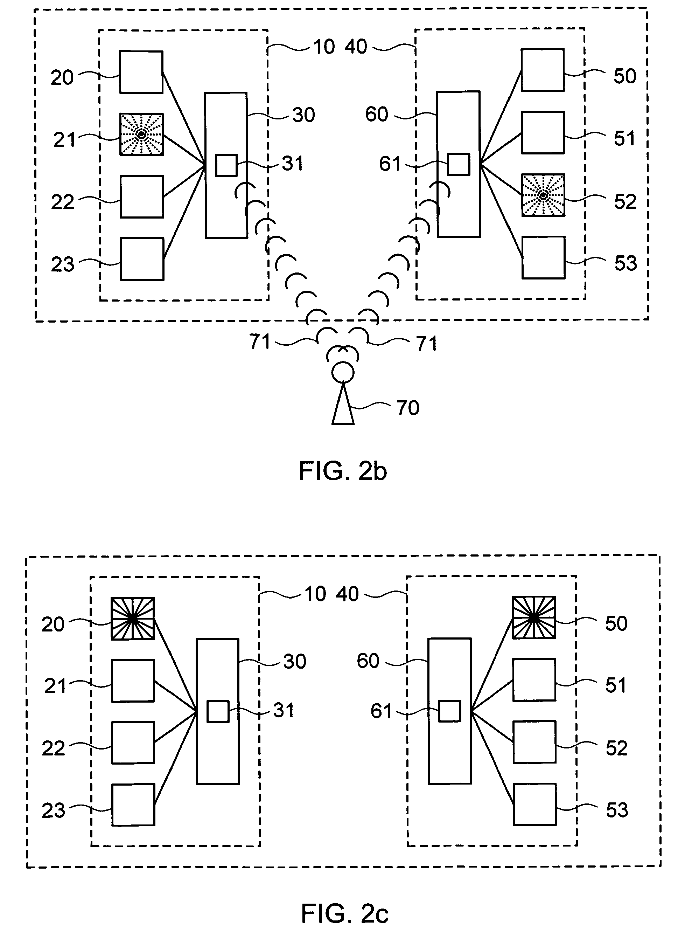

FIG. 2b zeigt, wie auf ein externes Signal hin die Taktgeber-Module 31, 61 zurückgesetzt werden. Von einer schematisch dargestellten externen Antenne 70 werden Funksignale 71 an die Module 31, 61 innerhalb der Steuerungseinheiten 30, 60 gesendet. Die Takterzeugung wird abgebrochen und die Ansteuerung der mittlerweile erreichten Anzeigeelemente 21 und 52 wird eingestellt.

In FIG. 2c schließlich beginnen nach dem Zurücksetzen die Lauflichter wieder mit ihrer synchronen Sequenz. Hierbei leuchten gleichzeitig die Anzeigeelemente 20 und 50.

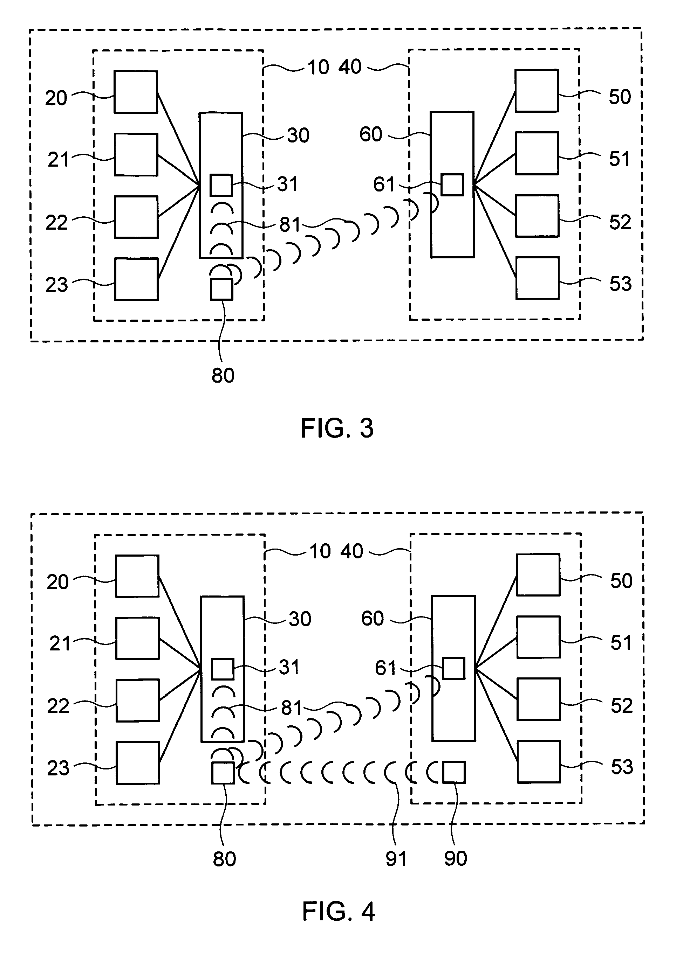

FIG. 3 zeigt ein erfindungsgemäßes Anzeigeelement-System, wobei zusätzlich eine Kontrolleinheit 80 vorgesehen ist. Diese Kontrolleinheit 80 kann Funksignale 81 aussenden, wodurch die Taktgeber-Module 31, 61 zurückgesetzt werden. Ist, wie hier gezeigt, die Kontrolleinheit 80 mit einer Anzeigeelement-Gruppe 10 assoziiert, so kann das Anzeigeelement-System insgesamt als master/slave-Anordnung konfiguriert werden.

FIG. 4 zeigt ein weiteres erfindungsgemäßes Anzeigeelement-System. In diesem System ist in jeder Anzeigeelement-Gruppe 10, 40 eine Kontrolleinheit 80, 90 vorgesehen. Jede der Kontrolleinheiten 80, 90 kann Signale senden und empfangen, so dass es sich um einen Duplex-Betrieb handelt. Hier ist wieder eine master/slave-Anordnung realisiert, wobei Kontrolleinheit 80 die Führung übernimmt. Wie bereits zuvor sendet die Kontrolleinheit 80 Funksignale 81 aus, um die Taktgeber-Module 31, 61 zurückzusetzen. Allerdings kann sie auch von Kontrolleinheit 90 Funksignale 91 empfangen, in denen beispielsweise Informationen über die Art der Anzeigelement-Gruppe 40 enthalten sind.

## Patentansprüche

1. Synchronisierbares Anzeigeelement-System, umfassend:
eine erste Anzeigeelement-Gruppe (10), umfassend eine Mehrzahl von individuell ansteuerbaren Anzeigeelementen (20, 21, 22, 23) und eine Steuerungseinheit (30) zur taktgebundenen sequentiellen Ansteuerung der Anzeigeelemente (20, 21, 22, 23); und
eine zweite Anzeigeelement-Gruppe (40), umfassend eine Mehrzahl von individuell ansteuerbaren Anzeigeelementen (50, 51, 52, 53) und eine Steuerungseinheit (60) zur taktgebundenen sequentiellen Ansteuerung der Anzeigeelemente (50, 51, 52, 53);
wobei die Steuerungseinheiten (30, 60) der Anzeigeelement-Gruppen (10, 40) jeweils Taktgeber-Module (31, 61) umfassen, welche eingerichtet sind, um auf ein drahtlos gemeinsam an die Steuerungseinheiten (30, 60) übermitteltes Signal (71, 81) hin eine Takterzeugung abzubrechen und gemeinsam neu zu beginnen.

2. System gemäß Anspruch 1, wobei das drahtlose Signal zum Abbrechen der Takterzeugung ein Langwellen-Zeitsignal ist und/oder mittels eines drahtlosen Netzwerks übertragen wird.

3. System gemäß Anspruch 1, weiterhin umfassend eine Kontrolleinheit (80), welche drahtlos mit der ersten und zweiten Anzeigeelement-Gruppe (10, 40) kommuniziert und welche eingerichtet ist, um gemeinsam an die Steuerungseinheiten (30, 60) drahtlos ein Signal zum Abbrechen der Takterzeugung und zum gemeinsamen Neubeginn der Takterzeugung zu übermitteln.

4. System gemäß Anspruch 1, wobei die erste Anzeigeelement-Gruppe (10) und die zweite Anzeigeelement-Gruppe (40) jeweils eine Kontrolleinheit (80, 90) umfassen, welche zum drahtlosen Senden und Empfangen von Signalen eingerichtet sind und wobei eine der Kontrolleinheiten (80, 90) drahtlos mit der ersten und zweiten Anzeigeelement-Gruppe (10, 40) kommuniziert und eingerichtet und vorgesehen ist, um gemeinsam an die Steuerungseinheiten (30, 60) drahtlos ein Signal zum Abbrechen der Takterzeugung und zum gemeinsamen Neubeginn der Takterzeugung zu übermitteln.

5. System gemäß Anspruch 4, wobei diejenige der Kontrolleinheiten (80, 90), welche nicht vorgesehen ist, um an die Steuerungseinheiten (30, 60) drahtlos ein Signal zum Abbrechen der Takterzeugung und zum gemeinsamen Neubeginn der Takterzeugung zu übermitteln, eingerichtet ist, um an die andere der Kontrolleinheiten (80, 90) Informationen über die kontrollierte Anzeigeelement-Gruppe (10, 40) zu senden.

6. System gemäß Anspruch 1, wobei mindestens eine der Steuerungseinheiten (30, 60) eingerichtet ist, um beim Vorliegen von Signalen aus mehreren Quellen zum Abbrechen der Takterzeugung und zum gemeinsamen Neubeginn der Takterzeugung gemäß einer vorbestimmten Regel das Signal einer Quelle auszuwählen und auf dieses Signal hin die Takterzeugung abzubrechen und neu zu beginnen.

7. System gemäß Anspruch 5, wobei diejenige der Kontrolleinheiten (80, 90), welche nicht vorgesehen ist, um an die Steuerungseinheiten (30, 60) drahtlos ein Signal zum Abbrechen der Takterzeugung und zum gemeinsamen Neubeginn der Takterzeugung zu übermitteln, eingerichtet ist, um

8. System gemäß Anspruch 1, wobei die Anzeigeelemente (20, 21, 22, 23, 50, 51, 52, 53) ausgewählt sind aus der Gruppe umfassend Leuchtdioden, organische Leuchtdioden und/oder elektrolumineszente Folien.

9. Verfahren zum Synchronisieren eines Anzeigeelement-Systems, umfassend die Schritte:
Bereitstellen eines Systems gemäß Anspruch 1; und
Senden eines drahtlosen Signals an die Steuerungseinheiten (30, 60) zum Abbrechen der Takterzeugung und zum gemeinsamen Neubeginn der Takterzeugung.

10. Verfahren gemäß Anspruch 9, wobei das drahtlose Signal zum Abbrechen der Takterzeugung ein Langwellen-Zeitsignal ist und/oder mittels eines drahtlosen Netzwerks übertragen wird.
